# EUROPÄISCHE PATENTSCHRIFT

(11) **EP 1 295 677 B1**
(45) Veröffentlichungstag und Bekanntmachung des Hinweises auf die Patenterteilung: **02.08.2006**
(21) Anmeldenummer: 02405824.0
(22) Anmeldetag: 23.09.2002
(51) Int. Cl.: B23Q 11/08, F16C 29/08, B08B 1/00

(54) **Abstreifervorrichtung**
Wiper
Racleur

(30) Priorität: 25.09.2001 CH 17712001
(43) Veröffentlichungstag der Anmeldung: 26.03.2003
(73) Patentinhaber: Schneeberger Holding AG, 4914 Roggwil (CH)
(72) Erfinder: Schneeberger, Hans-Martin, 4900 Langenthal (CH); Kellerhals, Erwin, 3122 Kehrsatz (CH)
(74) Vertreter: EGLI-EUROPEAN PATENT ATTORNEYS

(56) Entgegenhaltungen:
- DE-A- 3 928 380
- DE-A- 4 343 741
- DE-A- 19 518 834
- DE-C- 944 413
- DE-U- 7 137 781
- DE-U- 9 422 394
- FR-A- 1 081 864
- US-A- 5 492 413
- US-A- 5 772 333
- US-A- 5 802 662
- PATENT ABSTRACTS OF JAPAN vol. 2000, no. 05, 14. September 2000 (2000-09-14) -& JP 2000 042863 A (NITTA IND CORP), 15. Februar 2000 (2000-02-15)

## Beschreibung

Die Erfindung betrifft eine Abstreifvorrichtung zur reinigenden Führung über eine Oberfläche eines Körpers, mit der durch Anlage von zumindest einer Abstreiferlippe der Abstreifvorrichtung gegen die Oberfläche und einer Relativbewegung zwischen dem Körper und der Abstreifvorrichtung, die eine Richtung aufweist, die von einer Längserstreckungsrichtung der Abstreiferlippe abweicht, eine Reinigung der Oberfläche vornehmbar ist.

Verschmutzte Oberflächen stellen in vielen Bereichen der Technik ein Problem dar, weshalb versucht wird, den Schmutz zu beseitigen. Schmutz kann insbesondere deshalb problematisch sein, da er zu einer Beschädigung und/oder übermässigem Verschleiss von über solche Oberflächen geführten Objekten bzw. Vorrichtungen führen kann. Unter Schmutz können im Zusammenhang mit der vorliegenden Erfindung vor allem Flüssigkeiten und/oder auf der Oberfläche angeordnete Partikel verstanden werden. Beispiele hierfür sind Kühlschmiermittel, Fette, Öle, Abrieb, Staub, Metall- und Holzspäne, sowie Schleifkörner. Bei Anwendungen, für die solche Verschmutzungen problematisch sein können, ist man deshalb stets bestrebt, die genannten Stoffe von der entsprechenden Stelle auf der Oberfläche zu beseitigen, bevor das zu schützende Objekt über die Oberfläche geführt wird.

Anwendungsbeispiele, bei denen die zuvor angesprochene Situation von besonderer Bedeutung ist, sind die sogenannten Linearbewegungsführungen. Hier wird ein Führungskörper an einer Schiene und relativ gegenüber dieser längsgeführt. Der Führungskörper kann hierbei an der Schiene gleitend oder über Wälzkörper gelagert sein. Insbesondere bei Wälzkörpern können bereits geringste Verschmutzungen ein unmittelbares Funktionsversagen oder eine erheblich verkürzte Lebensdauer einer Führung bewirken. Bei beiden der genannten Funktionsprinzipien von Linearbewegungsführungen ist es deshalb üblich, an jeder der beiden Stirnseiten des entsprechenden Führungskörpers eine Abstreifervorrichtung anzuordnen.

Eine Abstreifervorrichtung weist üblicherweise eine Abstreiferlippe auf, die über die zu reinigende Oberfläche geführt wird. An eine Abstreiferlippe werden bei Linearbewegungsführungen extrem hohe Anforderungen gestellt. Damit ein vollständiges Abstreifen von Fluiden mit unterschiedlicher Viskosität erreicht wird, sollte die Lippe auch bei höheren Vorschubgeschwindigkeiten nicht aufschwimmen. Auch kleinste Feststoffpartikel in der Grössenordnung von einem Mikrometer, beispielsweise flache Späne und Schleifkörner (lose oder klebend), muss die Lippe abstreifen und dürfen nicht zu einem Abheben und Unterwandern der Lippe oder zu einem dauerhaften Einbetten (Eindrücken) führen. Problematisch bei vielen vorbekannten Abstreiferlippen ist ferner, dass durch eine hohe Anpresskraft eine partielle Deformation der Lippenumgebung bewirkt wird. Bei Richtungswechsel kann dann die dadurch entstehende Reibkraft zu einer Walkbewegung führen, die bei längerem Betrieb von herkömmlichen Abstreiferlippen zu einer Abrundung der ursprünglich mehr oder weniger scharfen Lippe führt. Die Abstreifwirkung wird dadurch deutlich verringert.

Ausser Blechabstreifern kommen vor allem Abstreiferlippen aus Kunststoff zum Einsatz. So ist bei der Linearführung der DE 195 18 834 A1 in Führungsrichtung hinter einem Blechabstreifer zusätzlich ein Kunststoffabstreifer und zudem ein saugfähiger Filzabstreifer an einen Wagen der Linearführung jeweils angeschraubt. Lediglich der Filzabstreifer ist mit einer Biegefeder belastet. Bei dieser Lösung kann als nachteilig empfunden werden, dass sich der Blechabstreifer weder dauerhaft und lückenlos noch zumindest weitestgehend spielfrei an die Oberfläche der Schiene anschmiegt. Zudem ist ein unterschiedlich starker Verschleiss der einzelnen Abstreiferkomponenten zu befürchten.

Die DE 39 28 380 A1 zeigt einen Abstreifer, der das Gewicht eines Abdeckkastens einer Teleskopabdeckung trägt und hierzu eine in einer Aufnahme angeordneten U-förmige Gleitleiste aufweist. Diese soll aus einem Material bestehen, das die Formstabilität der Abstreifervorrichtung alleine durch die Gleitleiste gewährleistet. Die Gleitleisten sollen als Werkstoff PTFE aufweisen und deshalb auch gute Verschleisseigenschaften haben. Zwischen zwei Schenkeln der Gleitleiste wird über Klemmrippen der Gleitleiste eine Abstreiferlippe mit Abstand zu den Schenkeln eingeklemmt gehalten und auf die abzustreifende Oberfläche gepresst. Wesentlich soll hierbei sein, dass die innenliegende Abstreiferlippe aus einem elastischeren Material als die beiden Gleitleisten besteht. Da die Abstreiferlippe alleine die Abstreiferfunktion, jedoch keine Stützfunktion übernimmt, ist es möglich, nur anhand des Kriteriums einer guten Abstreiferfunktion für die Abstreiferlippe ein weicheres Material auszuwählen. Es ist jedoch zu befürchten, dass die Abstreiferlippe keine zufriedenstellende Lebensdauer und dauerhafte Abstreiferfunktion aufweist, da solche Materialen üblicherweise einem relativ hohen Verschleiß unterliegen. Es ist ferner nachteilig, dass zwischen die Gleitleisten und die Abstreiferlippe Partikel eindringen können, die sich dort festsetzen und zu Beschädigungen der Abstreifervorrichtung und der zu reinigenden Oberfläche führen können. Zudem ist die Abstreifervorrichtung aufgrund ihres komplizierten konstruktiven Aufbaus schwierig herzustellen und aufwendig zu montieren.

Aus der US-PS 5,492,412 geht ein Abstreifer für eine Linearbewegungsführung hervor, bei dem mehrere Schichten unterschiedlichen Materials hintereinander angeordnet und miteinander verbunden sind. Die mechanische Steifigkeit wird durch eine Verstärkungsplatte erzeugt, die Bestandteil des Schichtaufbaus ist. Eine der anderen Schichten besteht aus einem porösen Gummimaterial, das Schmiermittel enthält, um damit eine Lebensdauerschmierung zu erzielen. Eine im Vergleich zur letztgenannten Schicht etwa gleich dicke weitere Kunststoffschicht kann sich zwischen den beiden genannten Schichten befinden. Die Kunststoffschicht und die Schmiermittelschicht bilden die Dichtlippe des Abstreifers, die gleitend auf einer Schiene der Linearbewegungsführung anliegt. Zweck des beschriebenen Aufbaus dieses Abstreifers ist es, eine Schmierung zu erreichen, die auch unter schwierigen Einsatzsatzbedingungen funktionstüchtig ist.

Diese Lösung kann deshalb als nachteilig empfunden werden, weil sie aufgrund des porösen Gummimaterials eine geringe Verschleissfestigkeit aufweist. Zudem ist bei fortschreitendem Verschleiss eine Abrundung der Abstreiferlippe zu befürchten, die eine Unterwanderung der Lippe mit Schmutzobjekten ermöglicht.

In Form von Scheibenwischerblättern sind beispielsweise durch die US-PS 5,802,662 auch Abstreifer bekannt, die eine elastische Stützstruktur aufweisen, an der eine einstückig verbundene Abstreifschicht angeordnet ist. Bei diesen Abstreifern kann vorgesehen sein, dass sowohl die Stützstruktur als auch die Abstreifschicht eine Abstreiferlippe bilden und Kontakt mit der zu reinigenden Oberfläche haben, wobei die Stützstruktur und die Abstreifschicht unterschiedliche Reibungskoeffizienten aufweisen sollen. Mit diesem Aufbau soll eine auch bei unterschiedlichen Reibungsverhältnissen funktionierende Schwingungsdämpfung erreicht werden.

Dieser Typ von Abstreifer neigt jedoch dazu, mit fortlaufendem Verschleiss im Bereich der Abstreiferlippe einen mehr oder weniger halbrunden Querschnitt anzunehmen und seine ursprünglich vorhandene "scharfe Abstreifkante" zu verlieren. Dies wiederum kann die Abstreifeigenschaften erheblich verschlechtern. Insbesondere können durch die Abrundung Partikel und Flüssigkeiten leichter unter den Abstreifer gelangen und diesen unterwandern.

Zudem ist bei Scheibenwischern üblicherweise beabsichtigt, dass die Abstreiferlippe bei einer Richtungsumkehr des Scheibenwischers eine Walkbewegung um einen Drehpunkt ausführt. Hierdurch soll die Abstreiferlippe anstelle mit einer ersten Anlagefläche mit einer zweiten Anlagefläche an dem abzustreifenden Objekt anliegen. Dies verhindert jedoch, dass mit Scheibenwischern neben Flüssigkeiten auch Festkörper abgestreift werden können, die an dem abzustreifenden Objekt haften. Scheibenwischer sind deshalb für solche Anwendungsgebiete weitestgehend ungeeignet, bei denen Partikel und Öl abzustreifen sind, wie dies beispielsweise bei Linearbewegungsführungen regelmässig der Fall ist.

Aus der DE 944413 ist ein Walzenschaber bekannt, dessen Klinge in ihrer Stärke aus einer Mehrzahl von Schichten zusammengesetzt ist, wobei abriebfeste und abreibbare Schichten einander abwechseln und die abriebfesten Schichten jeweils eine grössere Dicke aufweisen als die abreibbaren Schichten. Dieser Walzenschaber bildet die Grundlage für die Oberbegriffe der Ansprüche.

Der Erfindung liegt deshalb die Aufgabe zugrunde, eine Abstreifvorrichtung zu schaffen, die auch nach langer Einsatzdauer und trotz fortgeschrittenem Verschleiss der Abstreiferlippe möglichst gleichbleibend gute Abstreifeigenschaften aufweist. Diese Abstreifeigenschaften sollen sowohl bei Flüssigkeiten als auch bei haftenden Festkörpern als Abstreifobjekte dauerhaft gewährleistbar sein.

Die Aufgabe wird bei einer Abstreifervorrichtung der eingangs genannten Art erfindungsgemäss durch einen Abstreifer nach Anspruch 1. Dabei weist jeder der beiden Bereiche einen Kontaktflächenbereich auf, der zur Anlage gegen die zu reinigende Oberfläche während der Ausführung der Relativbewegung vorgesehen ist, dass die Kontaktflächenbereiche hierbei unterschiedliches Verschleissverhalten aufweisen, und dass ein Bereich in Bezug auf die vorgesehene Abstreifrichtung und zumindest in ihrem Kontaktbereich eine Dicke aufweist, die mindestens um den Faktor drei grösser ist als die Dicke des anderen Bereichs der Abstreiferlippe. Erfindungsgemäss sollten somit die Bereiche als Schichten mit unterschiedlichen Werkstoffen ausgebildet sein, die beide zur Anlage gegen eine zu reinigende Oberfläche vorgesehen sind, wobei die unterschiedlichen Werkstoffe der Schichten unterschiedliches Verschleissverhalten bzw. Verschleissfestigkeiten aufweisen.

Hiermit ist es möglich, für die Abstreiferlippe selbst zwei unterschiedliche Werkstoffe zu wählen, mit denen die an eine Abstreiferlippe gestellten unterschiedlichen Anforderungen insgesamt erfüllt werden. So kann beispielsweise mit einer Schicht die Form- und Führungsstabilität der Abstreiferlippe sichergestellt werden. Mit der anderen Schicht ist es möglich, gute Abstreifeigenschaften zu realisieren. Die beiden Werkstoffe unterstützen sich in einer Weise, durch die selbst bei fortgeschrittener Benutzungsdauer im wesentlichen gleichbleibend gute Abstreifeigenschaften vorhanden sind. Dies gilt selbst für anspruchsvolle Einsatzbedingungen, wie sie bei Linearbewegungsführungen oftmals gegeben sind.

Im Zusammenhang mit der Erfindung soll unter Verschleiss die Abnutzung der Dicke der Abstreiferlippe bzw. ihrer Schichten aufgrund von Abrasion verstanden werden. Mit dem genannten erfindungsgemässen Aufbau kann erreicht werden, dass sich der Verschleiss der beiden Schichten vorteilhaft gegenseitig beeinflusst. Ist der Verschleiss der einen Schicht gestiegen, so bedingt dies im Folgenden einen stärkeren Verschleiss der anderen Schicht, bis sich wieder ein Gleichgewicht des Verschleisszustandes der beiden Schichten eingestellt hat. Für die Lebensdauer der Abstreiferlippe ist deshalb im wesentlichen nur die verschleissfestere Schicht massgeblich. Die weniger verschleissfeste der beiden Schichten passt aufgrund der festen Verbindung der beiden Schichten ihren Verschleisszustand der Abnutzung der verschleissfesteren Schicht an.

Im Rahmen der Erfindung wurde auch erkannt, dass die Geometrien, Dimensionen (insbesondere der Dicke, bezogen auf die Abstreifrichtung der Abstreifvorrichtung) und die Werkstoffe der zumindest zwei Bereiche der Abstreiferlippe in Abhängigkeit von den zu erwartenden Einsatzbedingungen (nur Fluide oder auch Feststoffe) gewählt und insbesondere aufeinander abgestimmt sein sollten. Durch eine nachfolgend noch näher erläuterte Abstimmung dieser Einflussfaktoren der beiden Bereiche kann ein zumindest näherungsweise gleicher Verschleissfortschritt erzielt werden. Dies trägt dazu bei, dass trotz fortschreitendem Verschleiss der Abstreiferlippe diese im Kontaktbereich näherungsweise formstabil ist. Es lässt sich somit eine "selbstschärfende" Abstreiferlippe erzielen.

Um die Formstabilität weiter zu erhöhen, kann sich an die hintere Schicht ein in sich steifer Formkörper anschliessen, der vor allem Kräfte aufnehmen soll, die zumindest eine Komponente in Bewegungsrichtung der Abstreiferlippe aufweisen. Ein solcher Formkörper könnte auch in die hintere Schicht integriert sein. Als Formkörper kommen beispielsweise Anlagebleche in Betracht, die eine höhere Steifigkeit gegen Verformungen aufweisen, als die hintere Schicht selbst. Derartige Formkörper stützen die Abstreiferlippe und sollten mit Abstand zum abzustreifenden Objekt angeordnet sein.

Erfindungsgemässe Abstreiferlippen können länger als bisher im Einsatz bleiben, da sie bei Einhaltung der Bedingungen weder Walkbewegungen ausführen noch eine verschleissbedingte Abrundung erfahren. Unter Walkbewegungen werden Relativbewegungen der Abstreiferlippe in oder entgegengesetzt zur Vorschubrichtung verstanden. Diese Walkbewegungen führen bei vielen Abstreifern aus dem Stand der Technik zu einer Abrundung der Abstreiferkante, was wiederum die Abstreifwirkung der Lippe stark verschlechtert. Der erfindungsgemäss vorzugsweise zumindest zweischichtig vorgesehene Aufbau ermöglicht es, die gegenüber der hinteren Schicht vorzugsweise deutlich dünnere Frontschicht härter auszubilden. Die härtere, beispielsweise metallische, Frontschicht kann der Abstreiferlippe Stabilität gegen Walkbewegungen verleihen. Sie kann zudem wie ein scharfer Schaber über die zu reinigende Oberfläche geführt werden. Die Form dieser in sich weitestgehend unelastischen, im Kontaktbereich aber wie eine Messerklinge scharfen Schicht, kann durch die hintere weichere und wesentlich breitere Schicht zusätzlich stabilisiert werden. Es ist somit von Vorteil, wenn die Frontschicht in ihrem Kontaktbereich nicht nur verschleissfester als der Kontaktbereich der hinteren Schicht ist, sondern wenn die Frontschicht zudem auch härter ist. Ein Dickenverhältnis der vorderen Schicht gegenüber der hinteren Schicht in Bezug auf die Bewegungsrichtung von zumindest 1:3 hat sich für eine Realisierung dieser Eigenschaften als günstig erwiesen.

Die hintere Schicht hat unter anderem die Aufgabe, als Gleitfläche zu wirken und den grösseren Teil einer auf die Abstreiferlippe wirkenden Anpresskraft aufzunehmen. Die im Bereich ihrer Gleitfläche vorzugsweise deutlich breitere und möglicherweise tendenziell auch zu stärkerem Verschleiss neigende hintere Schicht ermöglicht eine bleibende Schärfe der Abstreifkante, d.h. der Frontschicht. Zudem kann durch eine geeignete Abstimmung der Härte der hinteren Schicht auf ihre Dicke, der Frontschicht der Abstreiferlippe auch zusätzlich Formstabilität verliehen werden. Eine solche Formstabilität ist von Bedeutung beispielsweise in Bezug auf die zu vermeidenden Walkbewegungen oder gegen partiell angreifende, an der abzustreifenden Oberfläche haftende Verunreinigungen.

Da die beiden Schichten fest, vorzugsweise stoffschlüssig und damit unlösbar und starr miteinander verbunden sein sollen, kann eine erfindungsgemässe Abstreiferlippe auch vergleichsweise einfach hergestellt werden und trotzdem eine hohe Lebensdauer und gute Abstreifeigenschaften aufweisen.

Es hat sich als bevorzugt gezeigt, dass der verschleissfestere Werkstoff in Bezug auf die vorgesehene Bewegungsrichtung (Abstreifrichtung), in welcher der Abstreifer vor allem seine Abstreiffunktion ausüben soll, vor dem weniger verschleissfesten Stützwerkstoff über eine zu reinigende Oberfläche geführt werden sollte. Somit trifft stets zuerst die verschleissfestere Schicht gegen Partikel, die auch auf der Oberfläche haften können. Derartige Partikel setzen einer Mitnahme durch die Abstreiferlippe einen erhöhten Widerstand entgegen, wodurch die Abstreiferlippe besonders stark beansprucht oder abgehoben wird. Durch die bevorzugte Anordnung der Schichten kann sichergestellt werden, dass der hierdurch bedingte Verschleiss der Abstreiferlippe so gering wie möglich gehalten wird, da für den genannten Zweck die verschleissfestere Schicht zum Einsatz kommt.

Die vorzugsweise dünnere vordere Schicht hat auch die Aufgabe, Fluide and feste Partikel so abzustreifen, dass sie nicht unter die Abstreifkante gelangen können. Dazu ist es sehr von Vorteil, wenn eine dauernd scharfe Abstreifkante vorhanden ist. Die Abstreifkante sollte zudem so stabil ausgebildet sein, dass weder ein hydraulischer Staudruck von unten noch ein in einer Rauheitsriefe hängendes Partikel die Abstreifkante anheben können. Es ist deshalb von Vorteil, wenn eine ausreichende Anpresskraft vorhanden ist. Andererseits sollte ebenso wie bei herkömmlichen Abstreifern die Anpresskraft nicht zu gross gewählt werden, damit nicht ein zu schneller Verschleiss eintritt und zudem die Reibung zu gross ist.

Selbstverständlich sollte auch die Verschleissfestigkeit der gehärteten Schiene (oder einer darauf angeordneten Abdeckung) so gewählt sein, dass bei der Frontschicht und nicht bei den Führungsflächen der Schiene, auf denen sich Wälzkörper bewegen, Verschleiss erzeugt wird.

Im Hinblick auf die selbstschärfenden Eigenschaften der Abstreiferlippe kann es in besonderem Masse vorteilhaft sein, wenn zudem vorgesehen ist, dass die verschleissfestere vordere Schicht in Richtung der vorgesehenen Längsbewegung eine deutlich geringere Dicke hat als die dahinter angeordnete Schicht. So kann die hintere Schicht vorzugsweise um zumindest den Faktor 5, besonderes bevorzugt um zumindest den Faktor 10 oder 15 dicker gestaltet sein.

Die weniger verschleissfeste hintere Schicht sollte hierbei in Abhängigkeit des gewählten Werkstoffes eine Dicke aufweisen, durch die eine im wesentlichen formstabile Anlage der Abstreiferlippe an der abzustreifenden Oberfläche gewährleistet ist. Die Dicke der vorderen Schicht sollte ebenfalls in Abhängigkeit des für diese Schicht gewählten Werkstoffes so bemessen sein, dass bei Abnutzung keine Kantenrundung entsteht. Wird diese Massgabe eingehalten, so führt eine Abnutzung der vorderen Schicht zu einer vorteilhaften Selbstschärfung der Abstreiferlippe. Dies bedeutet, dass trotz fortschreitendem Verschleiss der Abstreiferlippe deren Abstreifereigenschaften im wesentlichen beibehalten werden können. Zudem bleibt aufgrund des erfindungsgemäss zwangsweise stattfindenden zumindest annähernd gleichmässigen Verschleisses der vorderen und der hinteren Schicht bei fortschreitendem Verschleiss auch die Stützwirkung der hinteren Schicht für die vordere Schicht erhalten.

Im Zusammenhang mit Abstreiferlippen von Linearbewegungsführungen hat es sich als zweckmässig gezeigt, wenn die vordere Schicht aus einer federharten metallischen Schicht gebildet ist. So kann diese Schicht beispielsweise eine Bronzefolie aufweisen, an die die dahinter liegende Schicht angespritzt ist. Die Bronzeschicht kann eine Dicke von 0,2 mm bis 0,005mm, vorzugsweise von 0,02 mm bis 0,04 mm, aufweisen. Anstelle einer metallischen Frontschicht könnte auch ein harter Kunststoff mit vorzugsweise gutem Abriebverhalten verwendet werden, beispielsweise POM (Polyoxymethylen, Polyformaldehyd, Polyacetale) oder PEEK (Polyetheretherketon). Diese Materialien eignen sich insbesondere für Anwendungen, bei denen die Abstreiferlippe üblicherweise einen Ölfilm abtragen, lose Partikel wegschieben und einen durch Staudruck möglichen Keilspalt unterdrücken muss.

Ist nur eine geringe Beanspruchung der Abstreiferlippe zu erwarten, so können für die Frontschicht auch Kunststoffe wie beispielsweise TPU (thermoplastische Polyurethane), TPE (thermoplastische Elastomere), NBR (Nitrilkautschuk) oder FPM (Fluor-Kautschuk) in Frage kommen.

Ist hingegen mit grösseren Beanspruchungen zu rechnen, beispielsweise weil auf der Oberfläche festhaftende Partikel abgetragen werden müssen, dann sollten die hiermit verbundenen Beanspruchungen nicht zu einer Beschädigung oder zum Abheben der Abstreiferlippe führen. Es kann dann zweckmässig sein, in Bezug auf ihre Querschnittsfläche die Dicke der Abstreiferlippe zu erhöhen und/oder härtere Werkstoffe zu verwenden, wie die bereits oben beispielhaft genannten metallischen Werkstoffe. Wird für die vordere Schicht Kunststoff verwendet, kann auch eine Armierung dieser Schicht, beispielsweise durch ein hochfestes Gewebe, in Frage kommen. Das gleiche gilt für die hintere Schicht.

Um trotz fortschreitendem Verschleiss der Abstreiferlippe im wesentlichen konstante Abstreifeigenschaften der erfindungsgemässen Abstreiferlippe realisieren zu können, kann vorgesehen sein, dass die Abstreiferlippe federelastisch auf eine Oberfläche andrückbar ist. In einer besonders einfachen konstruktiven Ausgestaltung kann hierzu ein Federkörper vorgesehen sein, der in zweckmässiger Weise stoffschlüssig oder durch eine Klebung mit der Abstreiferlippe verbunden sein kann. Dies kann beispielsweise dadurch erreicht werden, dass der Federkörper als eine weitere Schicht der Abstreiferlippe ausgebildet ist. Der Federkörper kann auf die Kontaktbereiche der Abstreiferlippe eine Normalkraft bewirken, mit welcher die Kontaktbereiche gegen die zu reinigende Oberfläche gedrückt werden. Ebenso kann vorgesehen sein, dass der Federkörper die Kontaktbereiche verschieberichtungsabhängig selbstverstärkend bzw. selbstschwächend belastet, was beispielsweise durch eine geringfügige Schwenkbewegung um einen virtuellen Drehpunkt erreicht werden kann.

Eine besonders bevorzugte Verwendung einer erfindungsgemässen Abstreiferlippe stellen Linearbewegungsführungen dar, bei denen ein Führungskörper an einer Schiene entlang geführt wird. Es ist hierbei bevorzugt, wenn an beiden Stirnseiten des Führungskörpers eine erfindungsgemässe Abstreifervorrichtung angebracht ist, die gegen die Schiene anliegt. Bei der in Bewegungsrichtung vorderen Stirnseite des Führungskörpers sollte die verschleissfestere Schicht jeweils vor der weniger verschleissresistenten Schicht angeordnet sein. Dies bedeutet, dass an beiden Seiten des Führungskörpers die verschleissfesteren Schichten aussen zu liegen kommen.

Weitere bevorzugte Ausgestaltungen der Erfindung ergeben sich aus den abhängigen Ansprüchen.

Die Erfindung wird anhand der in den Figuren schematisch dargestellten Ausführungsbeispiele näher erläutert; es zeigen:
- Fig. 1: eine Linearbewegungsführung, die zum Einsatz einer erfindungsgemässen Abstreifervorrichtung vorgesehen ist;
- Fig. 2: eine Teilschnittdarstellung durch eine erfindungsgemässe Linearbewegungsführung;
- Fig. 3: einen Querschnitt durch eine erfindungsgemässe Abstreiferlippe;
- Fig. 4: eine stirnseitige Ansicht eines weiteren erfindungsgemässen Ausführungsbeispiels;
- Fig. 5a: eine stirnseitige Ansicht noch einer weiteren um eine Schiene angeordneten erfindungsgemässen Abstreiferlippe;
- Fig. 5b: einen Längsschnitt durch die Abstreiferlippe von Fig. 5a;
- Fig. 6: einen Teil eines Längsschnittes durch noch eine weitere erfindungsgemässe Abstreiferlippe;
- Fig. 7a: einen Querschnitt durch eine doppelwirkende erfindungsgemässe Abstreiferlippe;
- Fig. 7b: einen Schnitt entlang der Linie VII-VII von Fig. 7a.

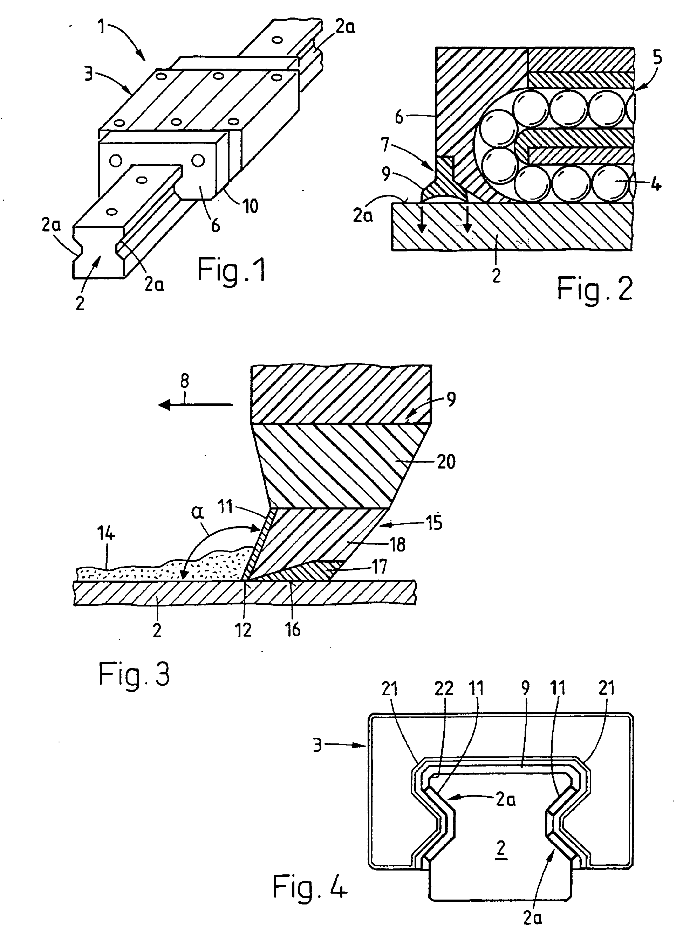

In Fig.1 ist als ein mögliches Anwendungsgebiet der vorliegenden Erfindung ein typischer Aufbau einer Linearbewegungsführung 1 dargestellt. Diese weist eine Profilschiene 2 und einen auf der Profilschiene 2 längs verfahrbaren Wagen 3 auf. Im Ausführungsbeispiel ist der Wagen 3 über lediglich in Fig. 2 gezeigte und in Fig. 1 nicht näher dargestellte Wälzkörper 4 längsverschiebbar. Die Wälzkörper 4 sind im Wagen in in sich geschlossenen Umlaufkanälen 5 angeordnet und stützen sich auf seitlichen Kontaktflächen 2a der Schiene 2 ab. In anderen Ausführungsbeispielen kann auch vorgesehen sein, dass ein Wagen gleitend an der Schiene entlang geführt wird. Dieser prinzipielle Aufbau derartiger Führungen ist dem Fachmann in vielfacher Weise bekannt.

Wie Fig. 2 zeigt, weisen auch bereits herkömmliche Linearbewegungsführungen 1 im Bereich der beiden Stirnseiten 6 des Wagens 3 üblicherweise jeweils eine Abstreifervorrichtung 7 auf. Diese hat die Aufgabe, Öl zurückzuhalten und Verunreinigungen von den Bereichen der Oberfläche (z.B. den Kontaktflächen) der Schiene 2 abzustreifen, über die der Wagen 3 geführt wird, bevor der Wagen über die jeweiligen Schienenabschnitte gelangt. In Bewegungsrichtung 8 des Wagens 3 wird somit stets zuerst die Schiene 2 abgestreift, bevor die Wälzkörper 4 auf die entsprechenden Stellen der Oberfläche gelangen.

Die Abstreifervorrichtung 7 weist hierzu eine Abstreiferlippe 9 auf, die in einer an dem Wagen 3 befestigten Stirnkappe 10 (Fig. 1) angeordnet und mit nicht näher dargestellten Befestigungsmitteln am Wagen fixiert sein kann. Die Abstreiferlippe 9 hat eine Längserstreckung, die im wesentlichen orthogonal zur Bewegungsrichtung 8 der Linearbewegungsführung 1 ausgerichtet ist.

Fig. 3 zeigt eine Querschnittsdarstellung eines ersten Ausführungsbeispiels einer erfindungsgemässen Abstreiferlippe 9. Wie hier zu erkennen ist, weist die Abstreiferlippe 9 eine Frontschicht 11 auf, die im eingebauten Zustand gegenüber der abzustreifenden Oberfläche vorzugsweise um einen Winkel α, der von 90° bis 110° betragen kann, gegenüber der Oberfläche der Schiene 2 angestellt ist. Der Winkel α wird hierbei in einem Längsschnitt durch die Schiene bestimmt und ist ausgehend von der Oberfläche der Schiene 2 hin zur Aussenseite der Abstreifervorrichtung zu messen. Eine Kante der Frontschicht 11 ist als Kontaktbereich 12 zur schabenden Anlage gegen die Oberfläche vorgesehen. Die Frontschicht 11 ist zuständig für die eigentliche Abstreiffunktion der Abstreifervorrichtung, nämlich die Entfernung von Verunreinigungen 14 von der zu reinigenden Oberfläche.

In Bezug auf die vorgesehene Bewegungsrichtung 8 hinter der Frontschicht 11 ist eine ein- oder mehrteilige hintere Schicht 15 vorgesehen. Diese weist eine untere Gleitflächenschicht 17 auf, an der als Kontaktbereich 16 zur flächigen Anlage der hinteren Schicht 15 an der Schiene 2 eine Gleitfläche ausgebildet ist. Eine Dicke (Dimension in vorgesehener Abstreif- bzw. Bewegungsrichtung 8) der Gleitflächenschicht 17 kann in einer der Bewegungsrichtung 8 entgegengesetzten Richtung zunehmen. Die Gleitflächenschicht 17 sollte einen Werkstoff mit möglichst geringem Reibungskoeffizienten aufweisen. Selbstverständlich sollte auch die Verschleissfestigkeit der Gleitflächenschicht möglichst gross, auf jeden Fall aber geringer als die der Frontschicht sein. Im hier gezeigten Ausführungsbeispiel ist als Werkstoff beispielsweise thermoplastisches Polyurethan vorgesehen. Eine Dicke der Gleitflächenschicht kann beispielsweise 1,5 mm betragen.

Die im wesentlichen über ihre gesamte Höhe mit einer konstanten Dicke versehene Frontschicht 11 sollte hingegen aus einem Werkstoff bestehen, der im Vergleich zum Werkstoff der Gleitflächenschicht 17 bei den zu erwartenden Einsatzbedingungen weniger verschleisst. Eine Dicke der Frontschicht 11 sollte so auf deren Werkstoff abgestimmt sein, dass sich die Kante bzw. der Kontaktbereich 12 über die gesamte Länge der Abstreiferlippe gleichmässig abnutzt und keine Rundung entsteht. Im Ausführungsbeispiel besteht die Frontschicht aus federharter Bronzefolie und weist eine Dicke von ca. 0,07 mm auf.

Mit einer ebenfalls zur Abstreiferlippe und der hinteren Schicht gehörenden Stützkörperschicht 18 wird sowohl der Frontschicht 11 als auch der Gleitflächenschicht 17 Formstabilität gegeben. Die Stützkörperschicht 18 sollte deswegen einen Werkstoff aufweisen, der auch bei Druck-, Biege-, Scher- oder Ausbeulbelastungen hinreichend formstabil ist.

Die stoffschlüssig und damit einstückig mit der Stützkörperschicht 18 verbundene Frontschicht 11 und Gleitflächenschicht 17 können aufgrund der Stützkörperschicht 18 bei derartigen Belastungen ebenfalls ausreichende Formstabilität aufweisen. Die Front-, Gleitflächen- und Stützkörperschicht können über ihre gesamte Länge und Höhe stoffschlüssig miteinander verbunden sein. Dies kann beispielsweise dadurch erreicht werden, dass die Schichten durch Kunststoffspritzgiessen gleichzeitig in einer Spritzgiessform erzeugt werden.

Die Stützkörperschicht 18 hat auch die Aufgabe, partielle Deformationen der dünnen Frontschicht 11, aber auch der Gleitflächenschicht 17 so weit als möglich zu verhindern. Deformationen können beispielsweise hervorgerufen werden durch festsitzende Partikel oder aber auch durch einen sich beim Abstreifvorgang aufbauenden hydrostatischen Staudruck. Die Stützkörperschicht soll somit der Abstreiferlippe eine ausreichende Strukturfestigkeit verleihen. Sie kann beispielsweise ebenfalls aus thermoplastischem Polyurethan oder einem ähnlichen dauerelastischen Werkstoff bestehen.

Um ein sicheres Abstreifen von Schmiermitteln und Partikeln zu erreichen, sollten die Frontschicht 11 und die Gleitflächenschicht 17 mit einer gewissen Anpresskraft gegen die abzustreifende Oberfläche gedrückt werden. Hierzu kann die Abstreifervorrichtung eine Federkörperschicht 20, insbesondere eine dauerelastische Federkörperschicht 20, aufweisen. Diese kann über der Frontschicht 11 und der hinteren Schicht 15 angeordnet und mit diesen beiden unlösbar verbunden sein, beispielsweise durch ebenfalls eine stoffschlüssige Verbindung. Da die Federkörperschicht vorzugsweise ebenfalls aus einem spritzgussfähigem Kunststoff, wie beispielsweise einem thermoplastischen Polyurethan besteht, kann die Federkörperschicht im gleichen Arbeitsgang wie die anderen Schichten erzeugt und mit ihnen verbunden werden. Hierdurch kann die Federkörperschicht 20 aufgrund einer im eingebauten Zustand der Abstreifervorrichtung vorgesehenen Stauchung der Federkörperschicht auf beide Schichten 11, 15 eine Federkraft ausüben. Diese bewirkt einen gleichmässigen Andruck sowohl der Frontschicht 11 als auch der Gleitflächenschicht 17 gegen die abzustreifende Oberfläche. Zudem erzeugt die Federkörperschicht Rückstellkräfte in Richtung auf die zu reinigende Oberfläche beispielsweise aufgrund von Unebenheiten der zu reinigenden Oberfläche oder beim Einfedern der Wälzführung. Im übrigen kann im Zusammenhang mit der vorliegenden Erfindung unter "Federkörperschicht" jede Gestaltung verstanden werden, die federelastische Eigenschaften aufweist.

In dem in Fig. 4 gezeigten weiteren erfindungsgemässen Ausführungsbeispiel ist die Abstreiferlippe nur im Bereich der schienenseitigen Kontaktflächen 2a mit einer Frontschicht 11 aus beispielsweise Metallblech versehen. Der in Fig. 3 dargestellte Querschnitt eines erfindungsgemässen Abstreifers ist bei dem Ausführungsbeispiel von Fig. 4 somit nur in den Bereichen verwirklicht, in denen die Wälzkörper Kontakt mit der Schiene 2 haben. Der Aufbau von Fig. 4 bringt vor allem den Vorteil mit sich, dass die Abstreiferlippe in ihren äusseren Ecken 21 gedehnt und bei den inneren Ecken 22 in weiten Bereichen gestaucht werden kann. In einem nicht gezeigten weiteren Ausführungsbeispiel kann auch vorgesehen sein, dass entlang der im wesentlichen gesamten Länge der Abstreifervorrichtung eine Frontschicht vorgesehen ist und diese lediglich in Eckbereichen ausgelassen wird. Auch hierdurch kann in den Eckbereichen eine Beweglichkeit der Abstreiferlippe quer zur vorgesehenen Bewegungsrichtung erreicht werden. Eine Ausbildung, bei der die von beiden Seiten sich zum jeweiligen Eckbereich hin erstreckenden Teile einer Frontschicht in Bewegungsrichtung versetzt sind und geringfügig überlappen, ist ebenfalls denkbar.

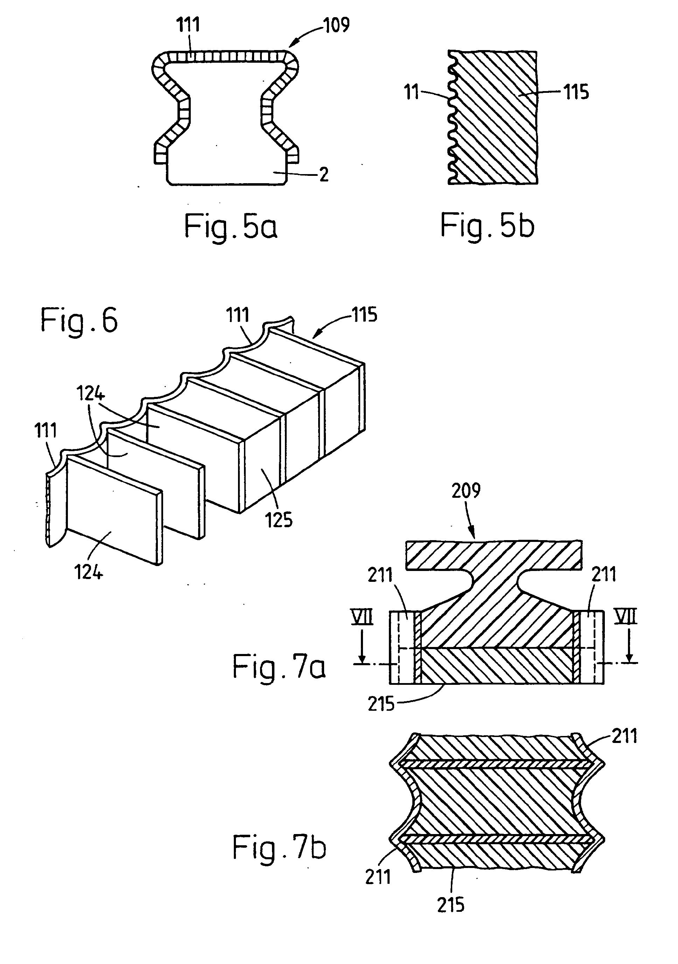

In Fig. 5a und 5b ist schliesslich noch ein weiteres erfindungsgemässes Ausführungsbeispiel gezeigt. Hier ist die Frontschicht 111 in Erstreckungsrichtung der Abstreiferlippe 109 wellenförmig ausgebildet, beispielsweise in Form einer Sinuslinie. Durch Strecken oder Stauchen der Welle kann eine Querdehnung der Frontschicht 111 möglich sein. Da die hintere Schicht und der Federkörper in gewissem Umfang elastisch sein sollten, kann eine Querdehnung der gesamten Abstreiferlippe 109 stattfinden. Hiermit ist eine Anpassung in Richtung der Schienenbreite und an Querwellen möglich.

Im Zusammenhang mit einer solchen Ausführungsform kann die hintere Schicht 115 auch gemäss Fig. 6 ausgebildet sein. Wie in dieser Figur schematisch dargestellt ist, können in der hinteren Schicht 115 zur besseren Abstützung der Frontschicht 111 auch plattenförmige Stege 124 vorhanden sein. Eine Längserstreckung der Stege 124 kann im wesentlichen parallel zur vorgesehenen Bewegungsrichtung 108 der Linearbewegungsführung ausgerichtet sein. Die Stege können beispielsweise aus Polyacetal bestehen und haben die Aufgabe die Frontschicht zu stützen. Zwischen zwei Stegen 124 kann jeweils stützendes Füllmaterial 125 vorgesehen sein, welches die Stege 124 gegenseitig stabilisiert und gleichzeitig eine Querdehnung der hinteren Schicht 115 zulässt. Als Werkstoff für das Stützmaterial kann beispielsweise ein weicher Polyurethan vorgesehen sein, der eine Querdehnung ermöglicht.

Die Frontschicht kann sowohl bei dem Ausführungsbeispiel von Fig. 6 als auch bei anderen erfindungsgemässen Ausführungsbeispielen mehrteilig sein. So kann ein in den Zeichnungen nicht dargestelltes dehnarmes biegeelastisches Faserverbundmaterial mit einer in Bewegungsrichtung vorne liegenden dünnen und harten zweiten Teilschicht verbunden sein. Auch eine in die Frontschicht integrierte Verstärkungs- und Gleitteilschicht könnte vorgesehen sein. Entscheidend ist auch dann, dass die hierdurch entstehende relativ dünne Frontschicht insgesamt eine bessere Verschleissfestigkeit aufweist als die hintere Schicht. Zudem sollten auch solche Frontschichten härter sein als die hintere Schicht, so dass sie ausreichende Festigkeit aufweisen, um Partikel von der zu reinigenden Oberfläche zu lösen und hierbei nicht beschädigt zu werden.

In weiteren Ausführungsformen kann auch die hintere Schicht insbesondere in ihrem Kontaktbereich mehrlagig gestaltet sein. Ebenso wie bei einer mehrlagigen Frontschicht kann in einem solchen Fall, ausgehend von der Frontschicht, die Verschleissfestigkeit bzw. Härte der einzelnen Lagen abnehmen. Schliesslich könnte die Abstreiferlippe auch mit einem Werkstoff versehen sein, bei dem sich über die Breite der Abstreiferlippe die genannten Eigenschaften kontinuierlich ändern. Dies kann beispielsweise bei einem Kunststoff über eine unterschiedliche Dichte realisiert werden. Bei Verbundwerkstoffen hingegen kann dies beispielsweise durch eine Variation der Packungsdichte des in die Matrix eingelagerten Werkstoffes geschehen.

In den Fig. 7a und 7b ist schliesslich eine doppelseitig wirkende Abstreiferlippe 209 gezeigt. Diese kann als Frontschichten 211 beidseitig jeweils eine aussenliegende federharte Metallfolie aufweisen, z.B. BeCu mit einer Dicke aus einem Bereich von 0,02 mm bis 0,08 mm, vorzugsweise von 0,04 mm bis 0,06 mm. Nach einem Prägeverfahrensschritt zur Erzeugung der beiden auch gewellt ausführbaren Frontschichten 211 können diese mit einem oder mehreren Elastomeren (TPU, TPE) hinterspritzt werden, um die verschiedenen Bestandteile der hinteren Schicht 215 (Gleitflächenschicht und Stützkörper) sowie des Federkörpers zu erzeugen. Im Gegensatz zu den zuvor gezeigten Ausführungsbeispielen, sind für diese Abstreiferlippe zwei um 180° versetzte Abstreifrichtungen vorgesehen. Die zweite ins innere des Wagens einer Linearbewegungsführung weisende Frontschicht 211 hat vor allem die Aufgabe, von der Schiene Schmieröl abzustreifen und dieses für die Schmierung der Wälzkörper zurückzuhalten.

## Patentansprüche

1. Abstreifvorrichtung (7)zur Führung über eine Oberfläche eines Körpers, mit der durch Anlage von zumindest einer Abstreiferlippe (9) der Abstreifvorrichtung (7) gegen die Oberfläche und einer Relativbewegung zwischen der Abstreifvorrichtung (7) und dem Körper, in eine vorgesehene Abstreifrichtung, die von einer Längserstreckungsrichtung der Abstreiferlippe (9) abweicht, eine Reinigung der Oberfläche vornehmbar ist, wobei die zumindest eine Abstreiferlippe (9) mindestens zwei unlösbar miteinander verbundene Bereiche mit unterschiedlichen Werkstoffen aufweist, die zumindest zwei Bereiche (11, 15) in Bezug auf die vorgesehene Richtung der Relativbewegung (8) hintereinander angeordnet sind, wobei jeder der beiden Bereiche einen Kontaktflächenbereich (12, 16) aufweist, der zur Anlage gegen die zu reinigende Oberfläche während der Ausführung der Relativbewegung vorgesehen ist, dass die Kontaktflächenbereiche (12, 16) hierbei unterschiedliches Verschleissverhalten aufweisen, und wobei ein Bereich (15) in Bezug auf die vorgesehene Abstreifrichtung (8) und zumindest in seinem Kontaktflächenbereich (16) eine Dicke aufweist, die mindestens um den Faktor drei grösser ist als die Dicke des anderen Bereichs (11) der Abstreiferlippe,
**dadurch gekennzeichnet,**
**dass** der die kleinere Dicke aufweisende Bereich (11) in Bezug auf die Abstreifrichtung (8) eine vordere Frontschicht bildet und in seinem Kontaktflächenbereich (12) verschleissfester ist als der andere der Bereiche (15) im gesamten Bereich dessen Kontaktflächenbereichs (16).

2. Abstreifvorrichtung nach Anspruch 1, **gekennzeichnet durch** eine Abstimmung der Werkstoffe und der Dicke der beiden Bereiche, **durch** die sich auch bei fortschreitendem Verschleiss der Abstreiferlippe bei einer Relativbewegung in Abstreifrichtung in beiden Bereichen ein gleichmässiger Verschleissfortschritt ergibt.

3. Abstreifvorrichtung nach einem der Ansprüche 1 oder 2, **dadurch gekennzeichnet, dass** einer der Bereiche (15) um zumindest den Faktor 5 bis 15, vorzugsweise 8 bis 12, besonders bevorzugt 10, grösser dimensioniert ist als die vordere Schicht (11).

4. Abstreifvorrichtung nach einem der vorhergehenden Ansprüche, **dadurch gekennzeichnet, dass** die Abstreiferlippe (9) zur Anlage gegen eine Oberfläche federelastisch stauchbar ist.

5. Abstreifvorrichtung nach Anspruch 4, **dadurch gekennzeichnet, dass** die Abstreiferlippe (9) eine federelastische Federkörperschicht (20) aufweist, die über zumindest einem der beiden Bereiche (11, 15) angeordnet und zumindest mit einem dieser Bereiche (11, 15) unlösbar verbunden ist.

6. Abstreifvorrichtung nach einem der vorhergehenden Ansprüche, **dadurch gekennzeichnet, dass** der hintere Bereich (15) eine die Frontschicht (11) stützende Stützkörperschicht (18) und eine Gleitflächenschicht (17) aufweist, wobei die Gleitflächenschicht (17) in Bezug auf die vorgesehene Bewegungs- und Wirkrichtung (8) der Abstreiferlippe (9) hinter der Frontschicht (11) angeordnet und mit einem Kontaktbereich (12) zur Anlage gegen eine zu reinigende Oberfläche ausgebildet ist.

7. Linearbewegungsführung, bei der ein Führungskörper in einer Relativbewegung translatorisch gegenüber einer Führungsbahn, insbesondere einer Führungsschiene, bewegbar ist, der Führungskörper mit zumindest einer Abstreifvorrichtung versehen ist, deren Abstreiferlippe mit einem Kontaktbereich gegen eine Oberfläche einer Schiene anliegt, **gekennzeichnet durch** eine Abstreifvorrichtung nach einem der Ansprüche 1 bis 6.

8. Linearbewegungsführung nach Anspruch 7, **dadurch gekennzeichnet, dass** der Führungskörper zwei Stirnseiten aufweist an denen jeweils zumindest eine Abstreifvorrichtung nach einem der Ansprüche 1 bis 6 angebracht ist, wobei in Bezug auf den Führungskörper der dünnere Bereich der Abstreiferlippe jeweils aussen angeordnet ist.

## Claims

1. A wiper device (7) for guiding over a surface of a body with which the surface can be cleaned by abutment of at least one wiper lip (9) of the wiper device (7) against the surface and a relative movement between the wiper device (7) and the body in a provided wiping direction which deviates from a direction of longitudinal extension of the wiper lip (9), wherein the at least one wiper lip (9) comprises at least two regions with different materials undetachably connected to one another, the at least two regions (11, 15) are arranged one after the other in relation to the provided direction of relative movement (8), wherein each of the two regions has a contact surface region (12, 16) which is provided for abutment against the surface to be cleaned during the execution of the relative movement, that the contact surface regions (12, 16) exhibit different wear behaviour in this case, and wherein one region (15) has a thickness in relation to the provided wiping direction (8) and at least in its contact surface region (16) which is at least a factor of three greater than the thickness of the other region (11) of the wiper lip,
**characterised in**
**that** the region (11) having the smaller thickness in relation to the wiping direction (8) forms a front layer and is more wear-resistant in its contact surface region (12) that the other region (15) over the entire range of its contact surface region (16).

2. The wiper device according to claim 1, **characterised by** a matching of the materials and the thickness of the two regions which results in uniform advancement of wear as the wear of the wiper lip progresses during a relative movement in the wiping direction in both regions.

3. The wiper device according to any one of claims 1 or 2, **characterised in that** one of the regions (15) is at least a factor of 5 to 15, preferably 8 to 12, especially preferably 10, larger than the front layer (11) .

4. The wiper device according to any one of the preceding claims, **characterised in that** the wiper lip (9) can be compressed in a resilient manner to abut against a surface.

5. The wiper device according to claim 4, **characterised in that** the wiper lip (9) has a resilient spring body layer (20) which is disposed above at least one of the two regions (11, 15) and is non-detachably connected to at least one of these regions (11, 15).

6. The wiper device according to any one of the preceding claims, **characterised in that** the rear region (15) has a supporting body layer (18) supporting the front layer (11), and a sliding surface layer (17), wherein the sliding surface layer (17) is arranged behind the front layer (11) in relation to the provided direction of movement and action (8) of the wiper lip (9) and is constructed with a contact region (12) for abutment against a surface to be cleaned.

7. A linear movement guide wherein a guide body can be moved in a relative movement translationally with respect to a guide track, especially a guide rail, the guide body is provided with at least one wiper device whose wiper lip abuts with a contact region against a surface of a rail, **characterised by** a wiper device according to any one of claims 1 to 6.

8. The linear movement guide according to claim 7, **characterised in that** the guide body has two front sides on which respectively at least one wiper device according to any one of claims 1 to 6 is attached, wherein the thinner region of the wiper lip is arranged on the outside in each case in relation to the guide body.

## Revendications

1. Dispositif racleur (7) à guider sur une surface d'un corps, avec lequel, par appui d'au moins une lèvre racleuse (9) du dispositif racleur (7) contre la surface et par un déplacement relatif entre le dispositif racleur (7) et le corps dans une direction de raclage prévue, qui est différente d'un sens d'extension en longueur de la lèvre racleuse (9), il est possible de procéder à un nettoyage de la surface, la au moins une lèvre racleuse (9) comportant aux moins deux zones en différents matériaux, reliées entre elles de façon indétachable, les aux moins deux zones (11, 15) étant disposées l'une derrière l'autre, par rapport à la direction prédéfinie, chacune des deux zones comportant une zone de surface de contact (12, 16), qui est prévue pour être appuyée contre la surface devant être nettoyée pendant la réalisation du déplacement relatif, de façon à ce que les zones de surface de contact (12, 16) fassent preuve à cet effet d'un comportement différent à l'usure, et une zone (15) présentant par rapport à la direction de raclage prévue (8) et au moins dans sa zone de surface de contact (16) une épaisseur qui est au moins supérieure du coefficient trois à l'épaisseur des autres zones (11) de la lèvre de raclage,
**caractérisé en ce que**
la zone (11) présentant la plus petite épaisseur forme par rapport à la direction de raclage (8) une couche frontale antérieure et est plus résistante à l'usure dans sa zone de surface de contact (12) que l'autre des zones (15), dans la zone totale de sa zone de surface de contact (16) .

2. Dispositif racleur selon la revendication 1,
**caractérisé par** une adaptation des matériaux et de l'épaisseur des deux zones, grâce à laquelle, même lors d'une usure croissante de la lèvre racleuse, on obtient une croissance régulière de l'usure dans les deux zones, lors d'un déplacement relatif en direction de raclage.

3. Dispositif racleur selon l'une quelconque des revendications 1 ou 2,
**caractérisé en ce que** l'une des zones (15) est de dimensionnement plus grand d'au moins le coefficient 5 à 15, de préférence 8 à 12, de façon particulièrement préférée 10 que la couche antérieure (11).

4. Dispositif racleur selon l'une quelconque des revendications précédentes,
**caractérisé en ce que** la lèvre racleuse (9) peut être comprimée de façon résiliente en appui contre une surface.

5. Dispositif racleur selon la revendication 4,
**caractérisé en ce que** la lèvre racleuse (9) comporte une couche de corps résilient (20), qui est disposée sur au moins l'une des deux zones (11, 15) et reliée de façon indétachable avec au moins l'une de ces zones (11, 15).

6. Dispositif racleur selon l'une quelconque des revendications précédentes,
**caractérisé en ce que** la zone postérieure (15) comporte une couche de corps de soutien (18) soutenant la couche frontale (11) et une couche de surface de glissement (17), la couche de surface de glissement (17) étant disposée derrière la couche frontale (11), par rapport au sens de déplacement et d'action (8) prévu de la lèvre racleuse (9) et étant conçue avec une zone de contact (12) pour l'appui contre une surface devant être nettoyée.

7. Guidage à déplacement linéaire, dans lequel un corps de guidage est déplaçable en translation dans un déplacement relatif par rapport à une piste de guidage, notamment une glissière de guidage, le corps de guidage est muni d'au moins un dispositif racleur, dont la lèvre racleuse s'appuie par une zone de contact contre une surface d'une glissière,
**caractérisé par** un dispositif racleur selon l'une quelconque des revendications 1 à 6.

8. Guidage à déplacement linéaire selon la revendication 7,
**caractérisé en ce que** le corps de guidage comporte deux zones frontales sur lesquelles est monté respectivement au moins un dispositif racleur selon l'une quelconque des revendications 1 à 6, la zone la plus mince de la lèvre racleuse étant respectivement disposée à l'extérieur, par rapport au corps de guidage.
